# DEMANDE DE BREVET EUROPEEN

(11) **EP 1 359 049 A1**
(43) Date de publication de la demande: **05.11.2003**
(21) Numéro de dépôt: 03290946.7
(22) Date de dépôt: 16.04.2003
(51) Int. Cl.: B60M 3/00

(54) **Procédé et dispositif pour le contrôle et la régulation de la puissance consommée par un système de transport**

(30) Priorité: 03.05.2002 FR 0205600
(71) Demandeur: Alstom, 75116 Paris (FR)
(72) Inventeur: Seddiki, Rachid, 75019 Paris (FR); Cornic, Daniel, 78112 Fourqueux (FR)
(74) Mandataire: de Lambilly Delorme, Marie Pierre

(57) **Abrégé**

Procédé pour le contrôle et la régulation de la puissance et de l'énergie consommées par un système de transport comportant des véhicules à traction électrique, le système de transport comprenant un système d'alimentation comportant au moins un poste d'alimentation connecté à un réseau externe de fourniture d'électricité, le poste d'alimentation fournissant de l'énergie à des sous-stations alimentant des sections de lignes d'alimentation sur lesquelles sont connectés des moyens capteurs de courant portés par lesdits véhicules, caractérisé en ce qu'il comporte les étapes suivantes :
- mesure de la puissance électrique instantanée et/ou de l'énergie demandée auprès du réseau externe de fourniture d'électricité par le ou lesdits postes d'alimentation,
- transmission d'une consigne à au moins l'un des véhicules ferroviaires lorsque la puissance ou l'énergie demandée auprès du réseau externe tend à dépasser un seuil assigné, la consigne agissant sur le convertisseur embarqué à bord du véhicule pour réduire temporairement la puissance et/ou la vitesse de rotation du moteur de traction.

## Description

L'invention se rapporte à un procédé et à un dispositif pour le contrôle et la régulation de la puissance et de l'énergie consommées par un système de transport utilisant des véhicules à traction électrique et pour lequel les besoins en électricité sont assurés par un réseau externe de fourniture d'électricité.

Les systèmes de transport, tels que métro, tramway, trolleybus ou transport routier guidé, présentent des besoins en énergie importants qui sont mal répartis dans la journée, ces besoins en énergie étant essentiellement constitués par l'énergie de traction dépensée par les véhicules. De tels besoins en énergie présentent un pic de puissance le matin et l'après-midi coïncidant avec les heures de pointes d'entrée et de sortie de bureau. Il est donc peu avantageux pour une société exploitant ces systèmes de transport de posséder des centrales électriques afin d'assurer sa fourniture en électricité car de telles centrales devront être dimensionnées pour répondre aux pics de puissance aux heures de pointes mais ne seront que rarement exploitées à leur meilleur rendement.

Ainsi, il est économiquement plus rentable pour les sociétés gérant de tels systèmes de transport de se pourvoir en énergie électrique auprès de compagnies extérieures publiques ou privées de distribution d'électricité. De telles compagnies possèdent des réseaux de fourniture d'électricité qui assurent une grande sûreté d'approvisionnement et peuvent répondre, de part leurs interconnexions, aux crêtes de puissance. Toutefois, la plupart des tarifs des compagnies de distribution d'énergie tiennent compte de la puissance et de l'énergie souscrite par le client, les compagnies facturant des coûts supplémentaires importants pour tous les instants où la puissance ou l'énergie demandée par le client dépasse la puissance ou l'énergie pour laquelle il a souscrit un abonnement. Il est donc important pour de tels systèmes de transport de contrôler au mieux les crêtes de puissance demandées auprès du réseau externe de fourniture d'électricité, un tel écrêtement de la puissance ayant un impact financier significatif en permettant de limiter la puissance de souscription de l'abonnement et les dépassements par rapport à la puissance souscrite. Il en va de même de l'énergie électrique consommée.

Le but de la présente invention est donc de proposer un procédé de contrôle et de régulation de la puissance et de l'énergie consommée par un système de transport qui permette de limiter la puissance de crête et l'énergie demandées au réseau de fourniture d'électricité afin d'optimiser au mieux les coûts de fonctionnement et ceci sans réduction notable de la qualité du service rendu aux usagers. Un autre but de l'invention est un dispositif de régulation pour la mise en oeuvre du procédé.

L'invention a pour objet un procédé pour le contrôle et la régulation de la puissance et de l'énergie consommées par un système de transport comportant des véhicules à traction électrique, le système de transport comprenant un système d'alimentation comportant au moins un poste d'alimentation, connecté à un réseau externe de fourniture d'électricité, qui fournit de l'énergie à des sous-stations alimentant des sections de ligne d'alimentation sur lesquelles sont connectés des moyens capteurs de courant portés par les véhicules, chaque véhicule comportant au moins un convertisseur de puissance alimenté par les moyens capteur de courant et contrôlant la puissance et/ou la vitesse de rotation d'un moteur de traction du véhicule, caractérisé en ce qu'il comporte les étapes suivantes :
- mesure en temps réel de la puissance électrique instantanée et/ou de l'énergie demandée auprès du réseau externe de fourniture d'électricité par le ou les postes d'alimentation,
- transmission d'une consigne à au moins l'un des véhicules lorsque la puissance ou l'énergie demandée auprès du réseau externe a tendance à dépasser un seuil assigné, la consigne agissant sur le convertisseur embarqué à bord du véhicule pour réduire temporairement la puissance et/ou la vitesse de rotation du moteur de traction.

Selon des modes particuliers de réalisation, le procédé selon l'invention peut comprendre l'une ou plusieurs des caractéristiques suivantes prises isolément ou selon toutes les combinaisons techniquement possibles :
- les véhicules se déplacent selon un profil de conduite dans lequel le démarrage s'effectue en suivant une consigne d'effort de traction constant, cette consigne étant tenue jusqu'à l'obtention d'un courant de ligne I_{A} traversant le moteur de traction, la valeur du courant I_{A} étant une donnée connue du convertisseur embarqué correspondant habituellement au courant nominal de fonctionnement du moteur de traction ou à une valeur inférieure modulée en fonction de la charge du véhicule, la mise en vitesse successive du véhicule étant assurée en suivant une loi d'équipuissance jusqu'à la vitesse maximum ;
- les véhicules se déplacent selon un profil de conduite dans lequel le démarrage s'effectue en suivant une loi de progression de vitesse jusqu'à une vitesse maximum autorisée ;
- la consigne transmise au véhicule est une consigne α de réduction du courant de ligne limite I_{A} normalement assigné par le convertisseur embarqué à bord du véhicule, la consigne α agissant sur le convertisseur embarqué à bord dudit véhicule pour limiter le courant de ligne fournie au moteur de traction à une valeur I_{L}=α*I_{A} ;
- la consigne transmise au véhicule est une consigne β de réduction de la vitesse maximum normalement assignée par le convertisseur embarqué à bord dudit véhicule, la consigne β agissant sur le convertisseur embarqué à bord du véhicule pour limiter la vitesse de rotation du moteur de traction ;
- les véhicules recevant les consigne α et/ou β sont sélectionnés parmi les véhicules du système de transport fonction d'un indice de criticité Vc affecté à chaque véhicule et d'un indice de criticité Zc affecté à chaque section de ligne d'alimentation ;
- l'indice de criticité Vc affecté à chaque véhicule tient compte du retard éventuel du véhicule, de l'écart le séparant des véhicules voisins et/ou de la charge du véhicule et l'indice de criticité Zc affecté à chaque section de ligne d'alimentation tient compte de l'état des sous-stations et/ou du poste d'alimentation alimentant la section ainsi que de la géométrie du parcours suivi par les véhicules au niveau de la section d'alimentation ;
- les consignes α et/ou β reçues par chacun des véhicules est modulée en fonction du niveau de criticité Vc affecté au véhicule ;
- lorsque le système de transport comporte des auxiliaires d'infrastructure conséquents alimentés électriquement par un poste d'alimentation, on peut compléter l'envoi de consignes aux différents véhicules par l'envoi de consignes de réduction de régime de fonctionnement des auxiliaires d'infrastructure les moins critiques, tels que par exemple les systèmes de ventilation, d'air conditionné ou d'éclairage des stations de voyageurs ;
- le seuil de puissance et/ou d'énergie assigné est fonction respectivement de la puissance et de l'énergie maximum souscrite dans le contrat d'abonnement auprès du fournisseur d'électricité du réseau externe, les seuils pouvant être évolutifs en fonction des heures ou des périodes de l'année pour s'adapter au profil du contrat de souscription ;
- les seuils de puissance et d'énergie sont temporairement assignés à une valeur inférieure à la puissance et à l'énergie souscrite dans le contrat d'abonnement afin d'effectuer des économies d'énergie et de puissance ;
- le procédé comporte une étape de mesure des grandeurs électriques fournies par les sous-stations et cette mesure est utilisée pour la sélection des véhicules auxquels est transmise les consignes α et/ou β.

L'invention concerne également un dispositif pour le contrôle et la régulation de la puissance et de l'énergie consommées par un système de transport comportant plusieurs véhicules munis d'au moins un moteur électrique de traction, le système de transport comportant au moins un poste d'alimentation connecté à un réseau externe de fourniture d'électricité, le poste d'alimentation fournissant de l'énergie à des sous-stations alimentant des sections de ligne d'alimentation sur lesquelles sont connectés des moyens capteurs de courant portés par les véhicules, chaque véhicule comportant au moins un convertisseur de puissance alimenté par les moyens capteurs de courant et contrôlant la puissance et la vitesse de rotation du moteur de traction du véhicule, caractérisé en ce qu'il comprend :
- des moyens de mesure et de comptage de la puissance et de l'énergie électrique demandée auprès du réseau externe de fourniture d'électricité par le ou les postes d'alimentation,
- des moyens de détection pour détecter les instants où la puissance et/ou l'énergie demandée auprès du réseau externe a tendance à dépasser un seuil assigné,
- des moyens pour transmettre une ou des consignes à au moins l'un des véhicules lorsque la puissance ou l'énergie demandée auprès du réseau externe tend à dépasser le seuil, les consignes agissant sur le convertisseur embarqué à bord du véhicule pour réduire temporairement la puissance et/ou la vitesse de rotation du moteur de traction.

Selon une caractéristique du dispositif selon l'invention, les consignes transmises au véhicule sont des consignes α de réduction de courant de ligne et/ou des consignes β de réduction de vitesse, la consigne α agissant sur le convertisseur embarqué à bord du véhicule pour limiter le courant de ligne fournie au moteur de traction en deçà du courant de ligne limite I_{A} normalement assigné et la consigne β agissant sur le convertisseur embarqué pour limiter la vitesse de rotation du moteur de traction.

Selon une autre caractéristique du dispositif selon l'invention, les consignes sont transmises aux véhicules depuis un poste de commande centralisé au moyen d'un système de transmission d'ondes radioélectriques ou par un système de transmission infrarouge en station.

On comprendra mieux les buts, aspects et avantages de la présente invention, d'après la description donnée ci-après de plusieurs modes de réalisation de l'invention, présentés à titre d'exemple non limitatif, en se référant aux dessins annexés, dans lesquels :
- la figure 1 est un schéma de principe montrant un système d'alimentation de véhicules à traction électrique d'un système de transport, de type métro, régulé suivant le procédé selon l'invention ;
- les figures 2 et 3 sont des graphes représentant respectivement un exemple d'évolution du courant de ligne et de la force de traction des moteurs de traction des véhicules du système de transport de la figure 1 en fonction de la vitesse du véhicule et l'influence du procédé de régulation sur l'évolution du courant de ligne selon un mode particulier de réalisation de l'invention ;
- les figures 4 à 7 sont des organigrammes représentant les principales étapes de fonctionnement de différents modes de réalisation du procédé de régulation selon l'invention ;

Pour faciliter la lecture du dessin, seuls les éléments nécessaires à la compréhension de l'invention ont été représentés. Les mêmes éléments portent les mêmes références d'une figure à l'autre.

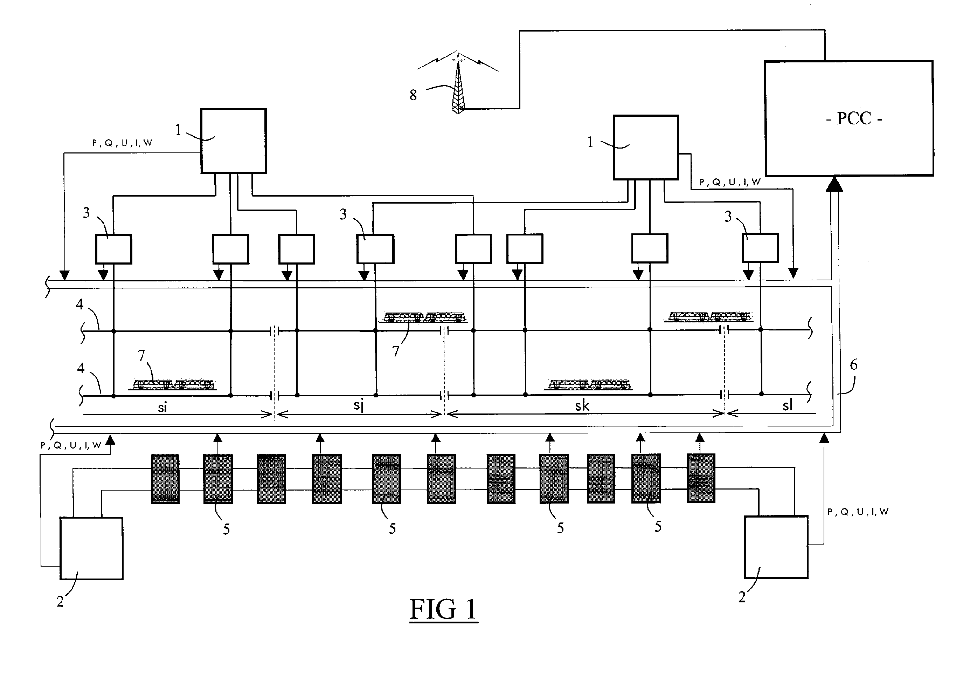

La figure 1 représente de manière simplifiée un système d'alimentation d'un système de transport de type métro. Conformément à cette figure, le système d'alimentation comporte deux paires de postes haute tension 1 et 2 alimentés chacun en électricité par des lignes d'alimentation, non représentées sur les figures, appartenant à un réseau extérieur de fourniture d'électricité, tel que le réseau EDF pour la France. La tension d'alimentation d'un tel réseau de fourniture d'électricité est typiquement de l'ordre 110 kV lorsque le réseau doit faire face à des besoins importants. Les postes haute tension 1 et 2 comportent chacun des points de comptage au niveau desquels on mesure la puissance active P, la puissance réactive Q et l'énergie W demandées par le poste haute tension au réseau extérieur, ces points de comptage étant utilisés par le fournisseur extérieur d'électricité pour la facturation de l'énergie et de la puissance consommées. Les postes haute tension 1et 2 comportent également des points de mesure de la tension U et l'intensité I de chacune des phases du courant fourni.

Conformément à la figure 1, les deux postes hautes tension 1 assurent la conversion de la tension d'alimentation de 110 kV vers une tension de l'ordre de 20 kV qui est redistribuée à plusieurs sous-stations 3 de traction disposées le long des voies de circulation, tous les 2,2 km environ. Dans les sous-stations 3 de traction, le courant est redressé et la tension abaissée à une tension continue de 750 V qui est envoyée à une ligne d'alimentation 4 découpée en plusieurs sections Si, Sj, Sk, Sl isolées les unes des autres. Ces sections de ligne d'alimentation Si, Sj, Sk, Sl sont par exemple constituées par des rails d'alimentation disposés le long des voies de circulation et servent à alimenter en électricité des véhicules 7 du système de transport, ces derniers comportant des moyens capteurs de courant, tels que des patins, venant frotter sur les rails d'alimentation. Avantageusement, les sections de ligne Si, Sj, Sk, Sl peuvent être pontées les unes aux autres, pour subvenir à un défaut d'alimentation d'une section de ligne, suite par exemple à la panne de l'un des postes haute tension.

Les deux postes haute tension 2 alimentent quant à eux, sous une tension de 20 kV, des auxiliaires d'infrastructure telles que des stations de voyageurs 5 du système de transport, ces dernières comportant notamment des transformateurs permettant d'alimenter les éléments consommateurs d'électricité de la station de voyageurs 5 tels que les systèmes de ventilation, d'air conditionné, d'éclairage ou les escaliers mécaniques.

Les mesures P, Q, W, U, I relevées au niveau des points de comptage et de mesure des postes haute tension 1 et 2 sont envoyées au travers d'un réseau de transmission 6, tel qu'un réseau de fibres optiques, jusqu'à un poste de contrôle centralisé PCC. Avantageusement, le poste de contrôle centralisé PCC reçoit également, au travers du réseau de transmission 6, les informations relatives à la tension et au courant de sortie des sous-stations 3, ces informations étant obtenues classiquement aux moyens de capteurs. Le poste de contrôle centralisé PCC reçoit de plus la localisation des différents véhicules 7 sur les voies, cette localisation étant effectuée par des moyens connus tels que des balises disposées le long des voies ou bien encore à l'aide d'un système GPS de localisation par satellites.

Enfin, les véhicules 7 du système de transport sont chacun pourvus d'au moins un moteur à traction électrique et d'un convertisseur embarqué DC/DC ou DC/AC permettant de faire varier de façon continue le courant et la tension aux bornes du moteur de traction, ce moteur pouvant être un moteur à courant continu, un moteur synchrone ou asynchrone.

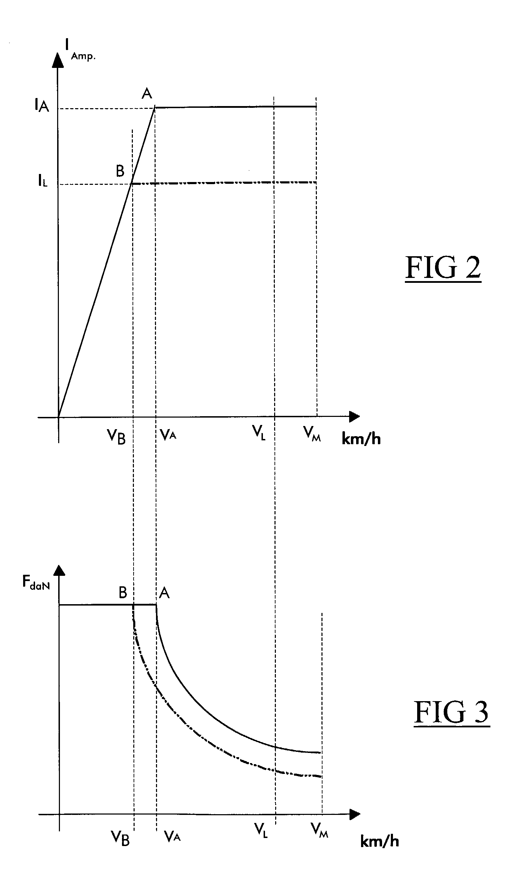

La conduite des différents véhicules du système de transport est assurée par des agents de conduite qui peuvent conduire leur véhicule soit manuellement, soit en mode manuel contrôlé par un système de protection automatique, soit en mode de conduite totalement automatique, les véhicules se déplaçant préférentiellement selon un profil de conduite optimisé du point de vue énergétique illustré sur les figures 2 et 3. Conformément à ces figures, en temps normal la progression des véhicules est obtenue de manière classique par un démarrage avec une consigne d'effort de traction F_{cons} constant, cette consigne d'effort de traction étant tenue jusqu'au point A où le courant I_{A} traversant le moteur de traction est plafonné par le convertisseur à la valeur du courant nominal définie pour moteur de traction, point A au niveau duquel le véhicule atteint la vitesse V_{A}, la mise en vitesse successive du véhicule étant ensuite assurée suivant une loi d'équipuissance P_{A}=FxV=constante jusqu'à la vitesse maximum Vₘ du véhicule.

Dans une variante, la consigne d'effort de traction F_{cons} pourra également être asservie à la charge du véhicule de sorte que l'effort de traction F_{cons} durant la phase de démarrage soit diminué lorsque le véhicule est peu chargé en voyageurs. Dans un tel cas, les véhicules sont équipés d'un système d'information donnant la charge des voyageurs à bord du véhicule et d'un dispositif de commande calculant l'effort de traction F_{cons} en fonction de la charge permettant d'obtenir une accélération du véhicule donnée quelle que soit sa charge. Ainsi, lorsque le véhicule est peu chargé, l'effort de traction est réduit et le véhicule parvient à la vitesse V_{A} avec un courant de ligne moteur I_{A} inférieur au courant nominal du moteur de traction, ce dernier étant préférentiellement dimensionné de sorte qu'à pleine charge le courant I_{A} soit égale au courant nominal du moteur de traction.

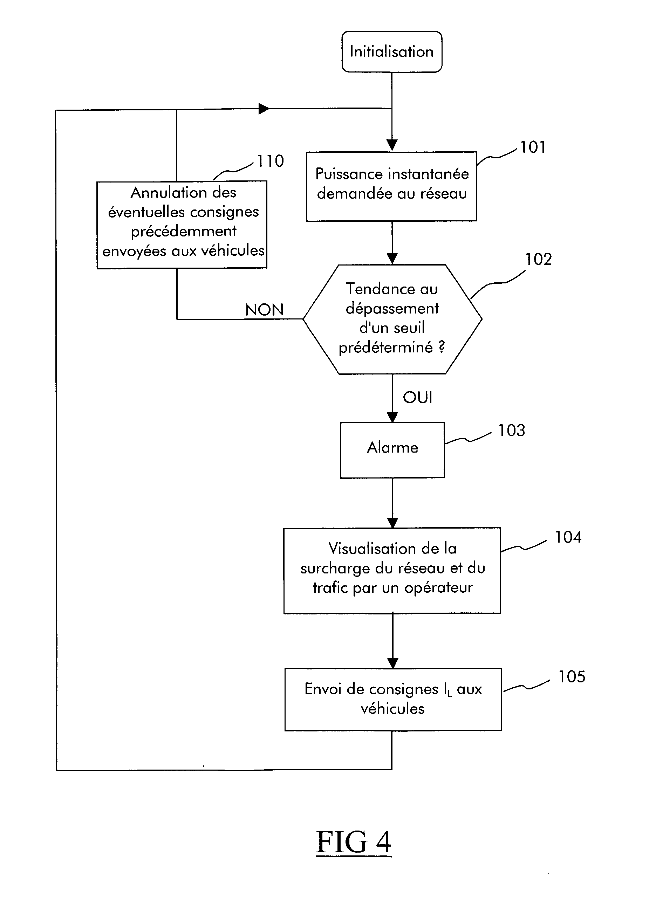

Le procédé de régulation selon l'invention, mis en oeuvre au niveau du poste de contrôle centralisé PCC, va maintenant être décrit en référence à l'organigramme représenté à la figure 4.

Dans une première étape 101 du procédé, la puissance totale demandée au réseau extérieur de fourniture d'électricité est calculée en temps réel au niveau du poste de contrôle centralisé PCC à partir des informations de puissance P émises par chacun des points de comptage inclus dans les postes haute tension 1 et 2.

Dans une deuxième étape 102 du procédé, la puissance totale précédemment calculée est comparée avec un seuil de puissance Pmax assigné correspondant par exemple à la valeur de la puissance d'abonnement souscrite pour l'instant t donné, cette puissance Pmax souscrite étant extraite d'une mémoire dans laquelle est stocké le profil de puissance souscrit dans l'abonnement auprès du fournisseur extérieur d'électricité.

Lorsque la puissance totale consommée tend à dépasser le seuil de puissance Pmax assigné, le procédé passe à l'étape 103 au cours de laquelle une alarme est émise au niveau du poste de contrôle centralisé PCC pour alerter un opérateur chargé de la surveillance du trafic.

Cet opérateur analyse alors, au cours de l'étape 104 du procédé, la situation de surcharge du réseau d'alimentation à partir d'un pupitre de surveillance sur lequel sont affichées les puissances consommées relatives aux sous-stations de traction 3 ainsi que l'état de criticité du trafic sur chacune des sections de ligne, cet état du trafic étant avantageusement déterminé en fonction du retard des véhicules, de l'intervalle entre les véhicules ainsi que de la charge des véhicules.

L'opérateur active ensuite manuellement, lors d'une étape 105 du procédé, l'envoi de consignes préprogrammées aux véhicules 7 localisés sur une section de ligne alimentée par une sous-station 3 surchargée pour laquelle le trafic n'est pas critique ou, lorsque trafic est critique sur cette section de ligne, aux véhicules 7 localisés sur les sous sections de ligne adjacentes à cette section de ligne et ceci de proche en proche de façon à réduire la puissance globale demandée au réseau.

Ces consignes préprogrammées sont des consignes α de réduction du courant de ligne qui sont envoyées aux différents véhicules 7 par un émetteur 8 d'ondes radio et qui correspondent à un coefficient réducteur à appliquer au courant maximum I_{A} que le convertisseur embarqué à bord du véhicule 7 recevant la consigne est habituellement autorisé à fournir au moteur de traction. Une telle consigne α de réduction de courant est choisie par exemple égale à 70% de sorte que, dans l'exemple représenté aux figures 2 et 3, le courant de ligne, que le convertisseur embarqué est autorisé à fournir au moteur de traction, est limité à un courant I_{L}= α * I_{A}.

Une telle limitation du courant de ligne fournie par le convertisseur embarqué à une valeur I_{L} inférieure à la valeur du courant I_{A} du moteur de traction permet de conserver lors du démarrage du véhicule une consigne d'effort de traction inchangée, cette consigne étant tenue jusqu'au point B correspondant à l'obtention du courant de ligne limité I_{L}, la mise en vitesse successive du véhicule étant alors assurée suivant une loi d'équipuissance P_{L}=α*P_{A}.

Une telle consigne α de réduction du courant de ligne fourni par le convertisseur embarqué présente donc l'avantage de limiter la puissance consommée par le véhicule sans changer le niveau d'accélération du véhicule au démarrage, ce qui permet de conserver les paramètres dynamiques du véhicule pour les dégagements en station, pour le remorquage ou poussage, et pour atteindre le plus rapidement la vitesse de coupure, source d'économie d'énergie.

Le procédé est ensuite bouclé de nouveau sur l'étape 101 de manière à ce que l'opérateur puisse ajuster lors des étapes suivantes les consignes α de réduction de courant préprogrammées envoyées aux véhicules 7 en fonction de la tendance à la progression du dépassement du seuil de puissance Pmax ou au contraire à la stabilisation et la tendance à la baisse mesurée lors des étapes 101 et 102.

Enfin, lorsque au cours de l'étape 102, la puissance totale consommée auprès du réseau est détectée comme n'ayant pas tendance à dépasser le seuil Pmax assigné alors l'opérateur procède, au cours de l'étape 110, à la suppression progressive des éventuelles consignes α de réduction de limitation envoyées précédemment aux véhicules, le procédé étant ensuite renvoyé à l'étape 101.

Dans un mode de réalisation simplifié du procédé de régulation précédemment décrit, l'opérateur pourra, au cours de l'étape 103, analyser la situation de surcharge du réseau d'alimentation à partir des seules données relatives à la puissance consommée par les postes haute tension 1 affichées sur un pupitre de surveillance et activer lors de l'étape 104 du procédé l'envoi de consignes α de réduction de courant à la flotte complète de véhicules 7 ou à une partie seulement de la flotte choisie arbitrairement en fonction de l'importance du dépassement de puissance affiché sur le pupitre de surveillance. Cette variante est particulièrement adaptée aux systèmes de transport ne comportant pas de moyens de localisation des véhicules et/ou dans lesquels le poste de contrôle centralisé PCC ne reçoit pas les informations relatives à la tension et au courant de sortie des sous-stations.

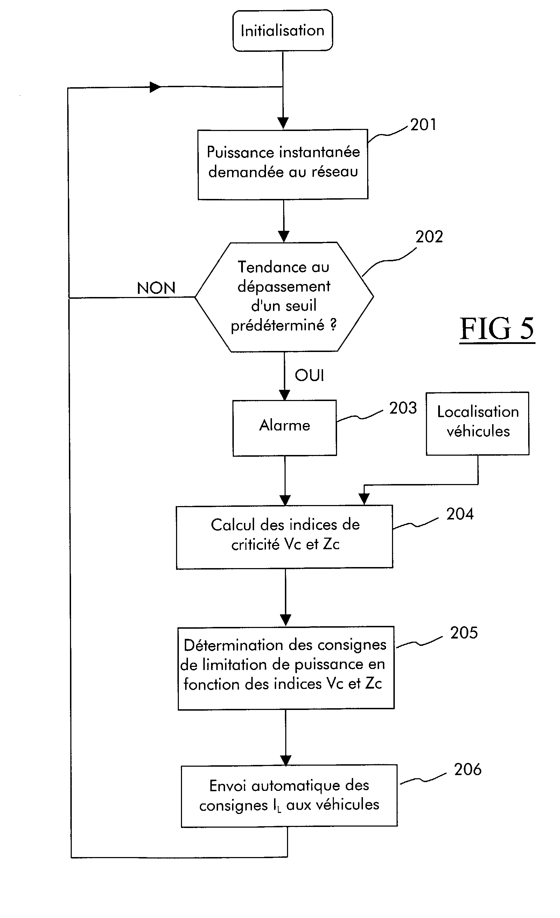

La figure 5 représente un autre mode de réalisation du procédé de régulation selon l'invention s'appliquant au système de transport de la figure 1. Ce procédé de régulation est mis en oeuvre par un logiciel installé au niveau du poste de contrôle centralisé PCC.

Conformément à la figure 5, le procédé comporte une première étape 201 au niveau de laquelle la puissance totale demandée au réseau extérieur de fourniture d'électricité est calculée en temps réel à partir des informations de puissance P émises par chacun des points de comptage inclus dans les postes haute tension 1 et 2.

Dans une étape 202 du procédé, la puissance totale précédemment calculée est comparée avec un seuil de puissance Pmax assigné correspondant à la valeur de la puissance d'abonnement souscrite pour l'instant t donné, cette puissance Pmax souscrite étant extraite d'une mémoire dans laquelle est stocké le profil de puissance souscrit dans l'abonnement auprès du fournisseur extérieur d'électricité.

Si la puissance totale consommée auprès du réseau n'a pas tendance à dépasser le seuil Pmax, le procédé retourne à l'étape 201.

Lorsque, suite à l'étape 202, la puissance totale demandée au réseau extérieur a tendance à dépasser le seuil Pmax assigné, le procédé se poursuit par une étape 203 au cours de laquelle une alarme est émise au niveau du pupitre de surveillance du poste de contrôle centralisé PCC, cette alarme étant prise en compte automatiquement par le poste de contrôle centralisé PCC pour élaborer des consignes α de limitation de puissance émises à différents véhicules 7 selon les étapes suivantes du procédé :

Dans une étape 204, un indice de criticité Vc est affecté en temps réel à chacun des véhicules 7 du système de transport et un indice de criticité Zc est affecté à chacune des sections Si, Sj, Sk, Sl des lignes d'alimentation 4.

L'indice de criticité Vc affecté à chaque véhicule 7 est calculé en fonction des conditions d'exploitation et intègre avantageusement les paramètres de retard du véhicule 7, d'intervalle de temps entre véhicules 7 et la charge du véhicule 7. Par exemple, les véhicules 7 en retard, ou séparés d'un faible intervalle de temps par rapport au véhicule le précédant ou le suivant, ou fortement chargés sont classés comme les plus critiques. Cet indice de criticité Vc est par exemple établi sur une échelle allant de 0 à 5, les véhicules 7 les moins critiques recevant l'indice de criticité Vc=0 et les véhicules 7 les plus critiques recevant l'indice de criticité Vc=5.

L'indice de criticité Zc lié aux sections de lignes Si, Sj, Sk, Sl est avantageusement fonction de l'état des sous-stations 3 alimentant la section de ligne mais aussi de la géométrie du parcours au niveau de la section de ligne. Un tel indice intègre les paramètres relatifs à la surcharge des sous-stations 3, au fait qu'une sous-station est hors service, que le poste haute tension 1 alimentant les sous-stations 3 est en dépassement ou que la géométrie du parcours au niveau de la section de ligne implique une forte consommation des véhicules, telle une rampe. Par exemple, les sections de lignes alimentées par des sous-stations 3 ou des postes haute tension 1 en surcharge seront classés comme critique alors que les sections de ligne servant à alimenter des véhicules se trouvant sur une rampe seront arbitrairement classées comme peu critique afin d'éviter qu'une réduction de puissance ne soit affectée aux véhicules circulant au niveau de cette section. L'indice de criticité Zc est par exemple établi sur une échelle allant de 0 à 5, les sections de ligne les moins critiques recevant un indice de criticité Zc=0 et les sections de ligne les plus critiques recevant un indice de criticité Zc=5.

Lors de l'étape suivante 205, les véhicules 7 destinés à recevoir une limitation de puissance sont sélectionnés en priorité parmi les véhicules circulant sur la section de ligne la plus critique et recevant un indice de criticité Vc faible autorisant une limitation de puissance. Lorsque le nombre de véhicules 7 répondant à ces conditions n'est pas suffisant, les véhicules sont sélectionnés parmi les véhicules se trouvant de sur les sections de ligne adjacentes à la section de ligne la plus critique et recevant un indice de criticité faible Vc autorisant une limitation de puissance. Le nombre de véhicules 7 sélectionnés pour recevoir une limitation de puissance est fonction de la valeur du dépassement de puissance mesurée lors de l'étape 202 et pourra être incrémenté ou diminué de proche en proche à chaque itération du procédé en fonction de la tendance à la progression du dépassement du seuil de puissance Pmax assigné ou au contraire à la stabilisation et la tendance à la baisse.

La limitation de puissance est réalisée en déterminant pour chacun des véhicules sélectionnés une consigne α de réduction du courant de ligne qui correspond à un coefficient réducteur à appliquer au courant maximum I_{A} que le convertisseur embarqué à bord du véhicule 7 recevant la consigne est habituellement autorisé à fournir au moteur de traction. Conformément çà la figure 2, une telle consigne α de réduction conduit à l'obtention d'un courant de ligne limite I_{L} répond à la relation I_{L}=α*I_{A}.

Préférentiellement, α est compris entre 70% et 100% en étant avantageusement échelonnée en fonction de l'indice de criticité du véhicule selon le tableau suivant :

| | | | | | | |
|---|---|---|---|---|---|---|
| Vc | 0 | 1 | 2 | 3 | 4 | 5 |
| α | 70% | 76% | 82% | 88% | 94% | 100% |

Lors de l'étape 206 suivante, les consignes α de réduction de courant sont envoyées par ondes radios aux différents véhicules 7 afin que les convertisseurs de chacun des véhicules respectent la consigne α de réduction qui lui est envoyée, le procédé étant ensuite renvoyé à l'étape 201.

Le système est ainsi capable de d'assigner des réductions de puissance par véhicule, groupe de véhicules, zones d'exploitation et ceci en dynamique en fonction de l'indice de criticité Z_{C} trouvé sur le parcours des véhicules.

Un tel procédé fonctionnera préférentiellement avec un temps de cycle inférieur à 5 secondes afin de s'adapter rapidement aux pointes de consommation. Afin de permettre un retour progressif à l'état normal des conditions de fonctionnement du système de transport, chacun des véhicules 7 comportera par exemple un algorithme de réinitialisation qui interrompt la prise en compte de la dernière consigne α de réduction reçue par le convertisseur embarqué lorsque aucune nouvelle consigne n'est reçue par ce même véhicule pendant une période donnée égale par exemple à 30 secondes.

Un tel mode de réalisation présente l'avantage de permettre un échelonnage de la limitation de puissance sur les différents véhicules en fonction de l'état de surcharge des sous-stations et de l'état de criticité du réseau afin de limiter au maximum la puissance demandée au réseau par le système d'alimentation sans perturber notablement le trafic.

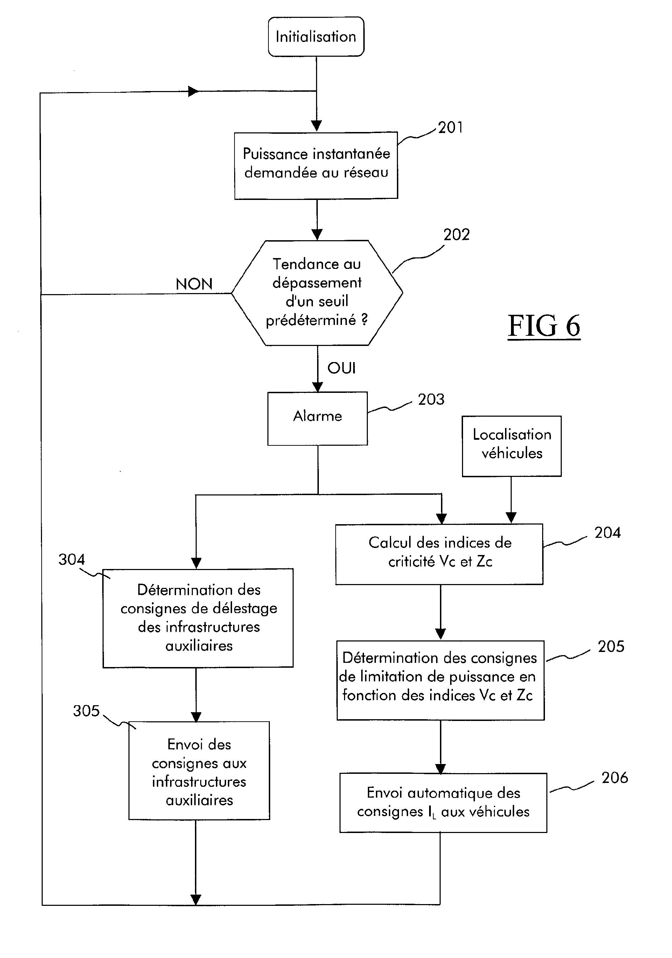

La figure 6 représente une variante de réalisation du procédé de régulation de la figure 4 dans laquelle des étapes 304 et 305 d'élaboration et d'envoi de consignes de délestage aux auxiliaires d'infrastructure sont effectuées en parallèle avec les étapes 204 à 206 précédemment décrites. Conformément à cette variante de réalisation, le procédé de régulation comporte une étape 304 dans laquelle des consignes de délestage sont élaborées au niveau du PCC en fonction de la tendance et du niveau de dépassement mesuré au cours de l'étape 202. Ces consignes de délestage sont destinées à réduire la consommation des auxiliaires d'infrastructure et sont par exemple constituées par des ordres de réduction de marche des dispositifs de confort présents dans les stations de voyageurs 5 tels que les équipements de ventilation, d'air conditionné, d'éclairage ou autres équipements mécaniques.

Lors de l'étape 305 suivante, les consignes de délestage sont envoyées aux différents auxiliaires d'infrastructure par l'intermédiaire du réseau 6 de transmission de fibres optiques.

Une telle variante de réalisation présente l'avantage de permettre une diminution accrue de la puissance et de l'énergie consommée par le système de transport auprès du réseau extérieur sans nuire à la sécurité des installations et sans dégrader notablement le confort des passagers.

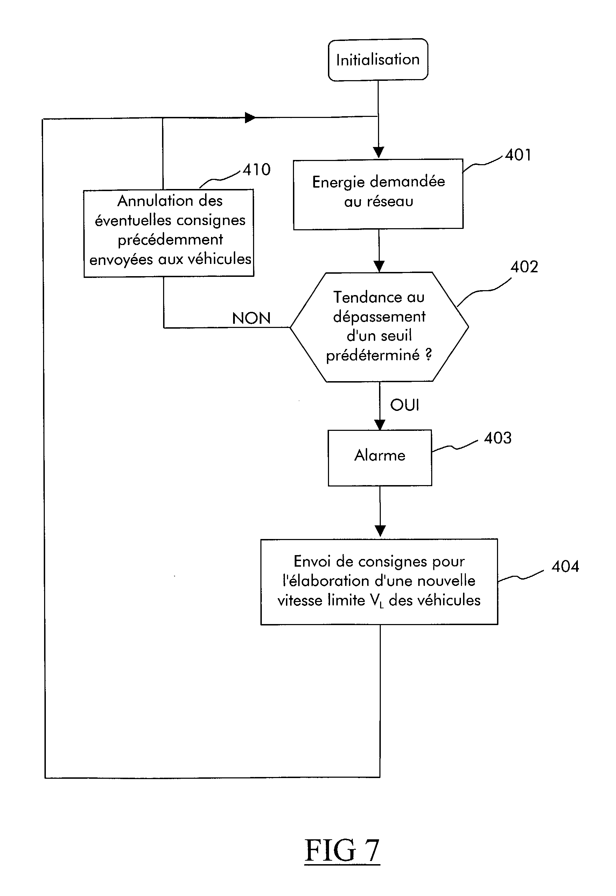

La figure 7 représente une autre variante de réalisation du procédé de régulation selon l'invention décrit à la figure 4 dans lequel on contrôle et on régule l'énergie maximum absorbée par les véhicules.

Conformément à la figure 7, le procédé comporte une première étape 401 au niveau de laquelle l'énergie totale demandée au réseau extérieur de fourniture d'électricité, par exemple sur une durée de 10 minutes, à partir des informations d'énergie W émises par chacun des points de comptage inclus dans les postes haute tension 1 et 2.

Dans une étape 402 du procédé, l'énergie totale précédemment calculée est comparée avec un seuil d'énergie Wmax assigné correspondant à la valeur de l'énergie souscrite dans le contrat de fourniture d'électricité, ce seuil Wmax souscrite étant extrait d'une mémoire.

Si l'énergie totale consommée auprès du réseau n'a pas tendance à dépasser le seuil Wmax, le procédé retourne à l'étape 401.

Lorsque, suite à l'étape 402, l'énergie totale demandée au réseau extérieur a tendance à dépasser le seuil Wmax assigné, le procédé se poursuit par une étape 403 au cours de laquelle une alarme est émise au niveau du pupitre de surveillance du poste de contrôle centralisé PCC, cette alarme étant prise en compte pour élaborer manuellement ou automatiquement des consignes β de limitation de l'énergie consommée émises aux véhicules 7.

Ces consignes β, qui sont envoyées au cours de l'étape 404, correspondent à un coefficient de réduction de la vitesse maximum V_{M} du véhicule normalement assignée de sorte que la nouvelle vitesse limite du véhicule est V_{L}= β*V_{M}, en se référant aux figures 2 et 3. Ce taux β est compris par exemple entre 60 et 100% en fonction de la longueur de parcours séparant les stations de voyageurs disposées de part et d'autre du véhicule. L'élaboration automatique des consignes β s'effectue par une méthode similaire à celle décrite pour l'élaboration des consignes α à la figure 5, en tenant compte d'un indice de criticité Vc affecté à chaque véhicule 7. Cet indice Vc intègre avantageusement les paramètres de retard du véhicule 7, de charge et de distance jusqu'à la prochaine station de voyageur de manière à ce que les véhicules les plus distants de la prochaine station de voyageur, les plus chargés et les plus en retard soient classés comme les plus critiques de sorte qu'ils reçoivent une consigne β proche de 100%. Le taux β est transmis à chaque véhicule à l'aide de moyens de transmission similaires à ceux précédemment décrits ou, de manière préférentielle, puisque le taux β dépend de la distance entre les stations de voyageur, il est transmis au niveau de chaque station de voyageur par un moyen de transmission local, telle qu'une transmission infrarouge.

A l'inverse, lorsque au cours de l'étape 402 l'énergie totale consommée auprès du réseau n'a pas tendance à dépasser le seuil Wmax autorisé, le procédé passe alors à l'étape 110 dans laquelle s'effectue la suppression progressive des éventuelles consignes β de réduction de vitesse envoyées précédemment aux véhicules, le procédé étant ensuite renvoyé à l'étape 401.

Dans une autre variante de réalisation de l'invention non représentés, la réduction de la puissance et de l'énergie par véhicule peut être simultanée, la consigne transmise au véhicule étant alors un couple τ=(α, β) où α et β correspondent respectivement au taux de réduction de courant de ligne et au taux de réduction de vitesse maximum tels que définis précédemment.

Les différents modes de réalisation de l'invention précédemment décrit ont pour principal but d'empêcher que la consommation globale instantanée du système de transport auprès du réseau de fourniture extérieure d'électricité soit supérieure à la puissance et/ou à l'énergie souscrite auprès du fournisseur afin d'éviter les surfacturations. Toutefois, dans une variante d'application, le procédé et le dispositif selon l'invention pourront également être appliqués dans le seul but d'effectuer des économies de puissance et d'énergie électrique, même si le réseau de fourniture extérieure d'électricité ou les véhicules ne sont pas exploités à la puissance maximum.

Le procédé selon l'invention fonctionne alors de manière similaire au procédé précédemment décrit, seuls les critères de sélection de la valeur de Pmax assigné étant différents puisque Pmax devient un seuil de consigne ajustable en fonction de l'économie de puissance désirée.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, le procédé et le dispositif selon l'invention peuvent s'appliquer à tout type de système de transport, tels que métro, tramway trolleybus, trains grande vitesse..., quel que soit le type de tension utilisé.

## Revendications

1. Procédé pour le contrôle et la régulation de la puissance et de l'énergie consommées par un système de transport comportant des véhicules (7) à traction électrique, ledit système de transport comprenant un système d'alimentation comportant au moins un poste d'alimentation (1) connecté à un réseau externe de fourniture d'électricité, ledit poste d'alimentation (1) fournissant de l'énergie à des sous-stations alimentant des sections de ligne d'alimentation (4) sur lesquelles sont connectés des moyens capteurs de courant portés par lesdits véhicules (7), chaque véhicule (7) comportant au moins un convertisseur de puissance alimenté par lesdits moyens capteur de courant et contrôlant la puissance et/ou la vitesse de rotation d' un moteur de traction dudit véhicule (7), **caractérisé en ce qu'**il comporte les étapes suivantes :
- mesure de la puissance électrique instantanée et/ou de l'énergie demandée auprès du réseau externe de fourniture d'électricité par le ou lesdits postes d'alimentation (1),
- transmission d'une consigne à au moins l'un des véhicules lorsque la puissance ou l'énergie demandée auprès du réseau externe a tendance à dépasser un seuil assigné, ladite consigne agissant sur le convertisseur embarqué à bord dudit véhicule (7) pour réduire temporairement la puissance et/ou la vitesse de rotation du moteur de traction.

2. Procédé selon la revendication 1, **caractérisé en ce que** lesdits véhicules (7) se déplacent selon un profil de conduite dans lequel le démarrage s'effectue en suivant une consigne d'effort de traction constant, cette consigne étant tenue jusqu'à l'obtention d'un courant de ligne I_{A} traversant le moteur de traction, la valeur du courant I_{A} étant une donnée connue du convertisseur embarqué correspondant au courant nominal de fonctionnement du moteur de traction ou à une valeur inférieure modulée en fonction de la charge du véhicule, la mise en vitesse successive du véhicule (7) étant assurée en suivant une loi d'équipuissance jusqu'à la vitesse maximum.

3. Procédé selon l'une quelconque des revendications 1 à 2, **caractérisé en ce que** lesdits véhicules (7) se déplacent selon un profil de conduite dans lequel le démarrage s'effectue en suivant une loi de progression de vitesse jusqu'à une vitesse maximum autorisée.

4. Procédé selon l'une quelconque des revendications 2 à 3, **caractérisé en ce que** la consigne transmise au véhicule (7) est une consigne α de réduction du courant de ligne limite I_{A} normalement assigné par le convertisseur embarqué à bord dudit véhicule (7), ladite consigne α agissant sur le convertisseur embarqué à bord du véhicule (7) pour limiter le courant de ligne fournie au moteur de traction à une valeur I_{L}=α*I_{A}.

5. Procédé selon la revendication 4, **caractérisé en ce que caractérisé en ce que** la consigne transmise au véhicule (7) est une consigne β de réduction de la vitesse maximum normalement assignée par le convertisseur embarqué à bord dudit véhicule (7), ladite consigne β agissant sur le convertisseur embarqué à bord du véhicule (7) pour limiter la vitesse de rotation du moteur de traction.

6. Procédé selon l'une quelconque des revendications 4 ou 5, **caractérisé en ce que** lesdits véhicules (7) recevant les consignes α et/ou β sont sélectionnés parmi les véhicules (7) du système de transport fonction d'un indice de criticité Vc affecté à chaque véhicule (7) et d'un indice de criticité Zc affecté à chaque section de ligne d'alimentation (4).

7. Procédé selon la revendication 6, **caractérisé en ce que** l'indice de criticité Vc affecté à chaque véhicule (7) tient compte du retard éventuel du véhicule, de l'écart le séparant des véhicules voisins et/ou de la charge du véhicule et **en ce que** l'indice de criticité Zc affecté à chaque section de ligne d'alimentation tient compte de l'état des sous-stations et/ou du poste d'alimentation alimentant ladite section ainsi que de la géométrie du parcours suivi par les véhicules au niveau de la section d'alimentation.

8. Procédé selon l'une quelconque des revendications 4 à 7, **caractérisé en ce que** les consignes α et/ou β de réduction reçues par chacun des véhicules (7) est modulée en fonction du niveau de criticité Vc affecté audit véhicule (7).

9. Procédé selon la revendication 8, **caractérisé en ce que** ladite consigne α est comprise entre 70% et 100% en fonction du niveau de criticité Vc du véhicule (7).

10. Procédé selon la revendication 8, **caractérisé en ce que** ladite consigne β est comprise entre 60% et 100% en fonction du niveau de criticité Vc du véhicule (7).

11. Procédé selon l'une quelconque des revendications 1 à 10, **caractérisé en ce que** lorsque ledit système de transport comporte des auxiliaires d'infrastructure conséquents alimentés électriquement par un poste d'alimentation (2), on complète l'envoi de consignes aux différents véhicules (7) par l'envoi de consignes de réduction de régime de fonctionnement des auxiliaires d'infrastructure les moins critiques, tels que par exemple les systèmes de ventilation, d'air conditionné ou d'éclairage des stations de voyageurs (5).

12. Procédé pour le contrôle et la régulation de la puissance consommée par un système de transport selon l'une quelconque des revendications 1 à 11, **caractérisé en ce que** la valeur du seuil de puissance et/ou d'énergie assigné est fonction respectivement de la puissance et de l'énergie maximum souscrite dans le contrat d'abonnement auprès du fournisseur d'électricité du réseau externe, lesdits seuils pouvant être évolutifs en fonction des heures ou des périodes de l'année pour s'adapter au profil du contrat de souscription.

13. Procédé selon la revendication 12, **caractérisé en ce que** lesdits seuils de puissance et d'énergie sont respectivement temporairement assignés à une valeur inférieure à la puissance et à l'énergie souscrite dans le contrat d'abonnement.

14. Procédé pour le contrôle et la régulation de la puissance consommée par un système de transport selon l'une quelconque des revendications 3 à 13, **caractérisé en ce qu'**il comporte une étape de mesure des grandeurs électriques fournies par les sous-stations (3) et **en ce que** cette mesure est utilisée pour la sélection des véhicules (7) auxquels est transmise les consignes α et/ou β.

15. Dispositif pour le contrôle et la régulation de la puissance et de l'énergie consommée par un système de transport comportant plusieurs véhicules (7) munis d'au moins un moteur électrique de traction, ledit système de transport comportant au moins un poste d'alimentation (1) connecté à un réseau externe de fourniture d'électricité, ledit poste d'alimentation (1) fournissant de l'énergie à des sous-stations (3) alimentant des sections de ligne d'alimentation (4) sur lesquelles sont connectés des moyens capteurs de courant portés par lesdits véhicules (7), chaque véhicule (7) comportant au moins un convertisseur de puissance alimenté par les moyens capteurs de courant et contrôlant la puissance et/ou la vitesse de rotation du moteur de traction dudit véhicule (7), **caractérisé en ce qu'**il comprend :
- des moyens de mesure et de comptage de la puissance et de l'énergie électrique demandée auprès du réseau externe de fourniture d'électricité par le ou lesdits postes d'alimentation (1),
- des moyens de détection pour détecter les instants où la puissance et/ou l'énergie demandée auprès du réseau externe a tendance à dépasser un seuil assigné,
- des moyens pour transmettre une ou des consignes à au moins l'un des véhicules (7) lorsque la puissance ou l'énergie demandée auprès du réseau externe tend à dépasser ledit seuil, lesdites consignes agissant sur le convertisseur embarqué à bord dudit véhicule (7) pour réduire temporairement la puissance et/ou la vitesse de rotation du moteur de traction.

16. Dispositif selon la revendication 15, **caractérisé en ce que** lesdites consignes transmises au véhicule (7) sont des consignes α de réduction de courant de ligne et/ou des consignes β de réduction de vitesse, ladite consigne α agissant sur le convertisseur embarqué à bord dudit véhicule (7) pour limiter le courant de ligne fournie au moteur de traction en deçà du courant de ligne limite I_{A} normalement assigné et ladite consigne β agissant sur le convertisseur embarqué pour limiter la vitesse de rotation du moteur de traction.

17. Dispositif pour le contrôle et la régulation de la puissance selon la revendication 15, **caractérisé en ce que** les consignes sont transmises aux véhicules (7) depuis un poste de commande centralisé (PCC) au moyen d'un système de transmission d'ondes radioélectriques (8) ou par un système de transmission infrarouge en station.
